# EUROPEAN PATENT SPECIFICATION

(11) **EP 1 265 144 B1**
(45) Date of publication and mention of the grant of the patent: **29.03.2006**
(21) Application number: 01410070.5
(22) Date of filing: 08.06.2001
(51) Int. Cl.: G06F 11/273, G06Q 10/00

(54) **Method and apparatus for providing remote support to a computer user**
Verfahren und Gerät zum Bereitstellen eines Fernhilfsdienstes
Procédé et dispositif pour porter assistance à distance à l'utilisateur d'un ordinateur

(43) Date of publication of application: 11.12.2002
(73) Proprietor: Hewlett-Packard Company, Palo Alto, CA 94304 (US)
(72) Inventor: Owhadi, Eric, 38360 Sassenage (FR)
(74) Representative: Lloyd, Richard Graham

(56) References cited:
- EP-A- 0 952 521
- WO-A-00/27847
- WO-A-00/41535
- US-A- 5 983 369
- "Test: Speicher im Web" TECCHANNEL.DE, [Online] 11 September 1999 (1999-09-11), pages 1-8, XP002183201 Retrieved from the Internet: <URL:http://www.tecchannel.de/internet/181 /index.html> [retrieved on 2001-11-16]
- "Today's News" REALMARKET, [Online] 20 March 2001 (2001-03-20), XP002183113 Retrieved from the Internet: <URL:http://www.realmarket.com/ssdex01/ssd ex032001.html> [retrieved on 2001-10-30] -& "Support FetchDog" 4DEVELOPERS, [Online] XP002183114 Retrieved from the Internet: <URL:http://www.4developers.com/fd/> [retrieved on 2001-10-30]

## Description

### Summary of and Background to the Invention

This invention relates to a method of providing access to computer configuration information to an interested party, to an arrangement and apparatus for providing remote support to a computer user, and to apparatus for obtaining remote support for a computer user.

In particular, although by no means exclusively, the invention relates, in broad terms, to remote user support facilities whereby a computer user, experiencing difficulties with his/her computer may contact a support agent with a view to obtaining guidance and technical instruction to assist the user to overcome the problem concerned.

Although a variety of such remote support systems are known, each has several drawbacks. The predominant shortcoming is caused by the fact that during a "trouble-shooting" call, the support agent will often ask the user to send the support agent files such as diagnostic results, log files, screen shots and system configuration information. Although this is technically feasible, sending the required files can be a complex process, and thus unattractive to less experienced computer users. Moreover, as transmission of the files using e-mail can introduce delays (in that e-mail transmissions are based on a "pull" approach), sending the files in this way does not constitute an ideal solution.

Hewlett-Packard Company, in EP 0952521 A2, disclose a network configuration change tracking method, using a revision control system and configuration status gathering which historically tracks and stores configuration changes in computers and interconnect devices, to aid in managing and troubleshooting networks of computer systems. Data collected is stored in a data storehouse on a computer within the network (remote support node) with configuration changes being viewable via the remote support node.

Document XP-0021 83 114 relates to Software products relating to the detection and repair of software errors on computers. "Support FetchDogTM" available from "4 Developers" enables help desks, IT departments, and other support providers to detect and repair software errors on a local or remote PC. Support FetchDogTM allows support providers to examine a remote or local PC, and determine which configuration elements are missing or different than expected. It works asynchronously, not requiring the support provider and user to remain on-line or on the phone. Support FetchDogTM creates small programs called Configuration Fetchers, which can be distributed by E-mail or on the web.

It is an object of the present invention to provide an improved method of providing access to computer configuration information to an interested party which overcomes or at least alleviates this and other shortcomings.

In hand with that, it is also an object of the present invention to provide an improved arrangement and apparatus for providing remote support to a computer user, and to provide improved apparatus for obtaining remote support for a computer user.

In accordance with a first aspect of the present invention, there is provided a method of providing remote support to a computer user as defined in claim 1.

The location identifier may be transmitted to the interested party in a form differing from that in which it is received by the computer.

The computer configuration information may be passed to the holding locution using a first data channel, the location identifier being received using a second, different, data channel.

The location information received by the computer may be imperceptible by the user, or may be such that it does not allow the user to understand the information directly.

Preferably, the transmission is encoded, the interested party thus performing a decoding operation in order to access the information.

Conveniently, the transmission comprises a sound.

The transmission may be such that it does not allow a human to understand the information directly from the transmission.

The decoding operation may thus comprise a transduction step.

The Internet site preferably is created dynamically using the configuration information.

Computer-specific information may also be transmitted to the interested party, the computer-specific information being used by the interested party to obtain comparison information for the purpose of comparing the computer's configuration to other, possible configurations.

The computer-specific information may comprise the computer's serial number and/or model number.

The comparison information may be extracted from a remote database, the comparison information being used dynamically to create a support-visible Internet site, differing from the user-visible site.

The user-visible site and the support-visible site may both be created using a servlet resident on a mutually accessible Web server.

The support-visible site may be generated and accessed substantially automatically upon receipt by the interested party of the location identifier and or computer-specific information.

The location identifier and computer-specific information may be transmitted to the interested party using a telephonic connection.

The location identifier preferably comprises part or all of the URL of the user-visible Internet site.

The configuration information may comprise diagnostic result files, the Web server passing the files to the user-visible Internet site as an HTML file.

Preferably, the configuration information is obtained by an agent received from an Internet source. The agent may be received using an object-oriented component such as an applet or ActiveX control.

Preferably, a connection is established with an update database, such that updated or replacement software components may be downloaded to the computer.

The connection may be established using the or an additional servlet.

In accordance with a second aspect of the present invention, there is provided an arrangement for providing remote support to a computer user, as defined in independent claim 22.

In accordance with a third aspect of the present invention there is provided a support agent apparatus for providing remote support to a computer user as defined in claim 23.

The location identifier receiving element may comprise a decoder, to decode the location identifier, which is such that it does not allow a human directly to understand the information provided thereby.

In accordance with a fourth aspect of the present invention, there is provided a client apparatus for obtaining remote support for a computer user as defined in claim 25.

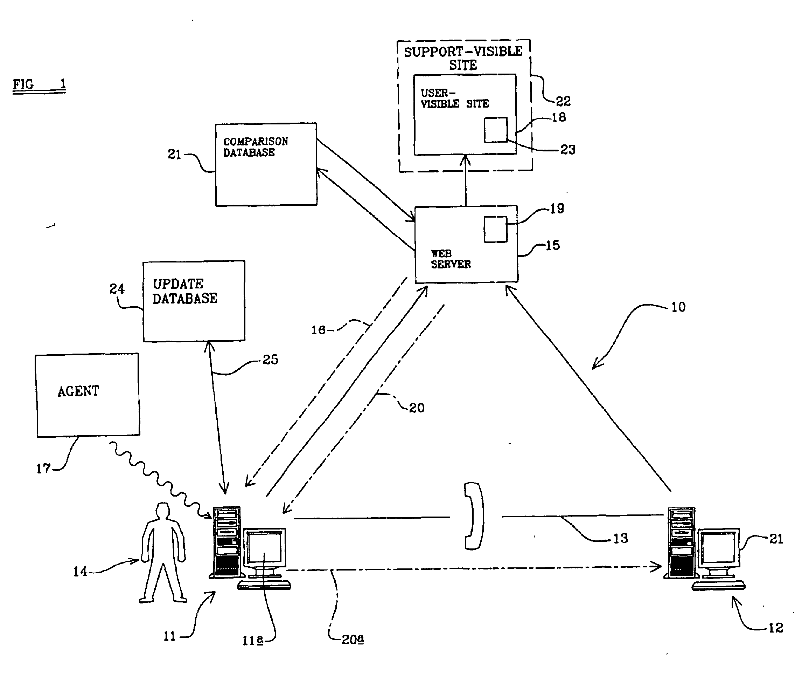

### Brief Description of the Drawing

The invention will now be described in greater detail but strietly by way of example only, by reference to the accompanying drawing, which illustrates, in schematic form, the various components and processes used when the invention, in its various aspects, is put into practice.

Referring to the Figure, this shows a remote support arrangement generally indicated at 10 by which a user 14 of a PC 11 may obtain remote support from a support agent shown generally at 12. The support agent, as will be appreciated, may be located some way from the PC 11, and a telephonic connection 13 is thus established between them, using a conventional land-line telephonic communication link. In order for the support agent 12 to be able effectively to assist the user, the support agent requires detailed information concerning the configuration and set-up of the PC 11. In order to extract this information from the computer, the user (illustrated generally at 14) has two options. First of all, the user could execute pre-installed diagnostic routines on the PC 11 which generate, in conventional manner, a number of files containing diagnostic test results, log files and system configuration information. To do this, however, the user will either need substantial prior experience or detailed guidance on a step-by-step basis from the support agent 12. This approach, therefore, is less than ideal.

An automated configuration information gathering process is thus preferred. To enable this to be achieved, the user 14 is prompted by the support agent 12 to access a specific (e.g. Hewlett Packard) support Website, using a browser application (not shown) featured within the PC 11. Accessing the Website, via a Web server 15, causes an applet 16 to be executed in the PC 11's browser environment, with the applet 16 generating a "pop-up" prompt box on the PC's display screen 11a. If, in response to the prompt box (not shown for reasons of clarity), the user 14 indicates that he/she will trust the support site, the applet 16 effects a download of a configuration information gathering agent 17 from an appropriate (perhaps separate) Website. The information gathering agent then runs, in generally conventional form, within the PC 11, and harvests hardware/software configuration data from within the PC.

Whichever approach is chosen by the user 14, the end result is that information relating to the configuration of the hardware and software associated with the PC 11 is obtained, with it then being necessary to convey this information to the support agent 12. It will be understood, of course, that at this stage in the process, a telephonic connection 13 is all that exists between the user 14 and the support agent 12. Although it would be possible for the user 14 to obtain hard copies of the configuration information thus gathered, and to send the information (e.g. by fax) to the support agent 12, this is likely to give rise to a number of operational difficulties, not least in that it would be difficult for the support agent 12 to "tally" the incoming fax with the existing telephonic connection, bearing in mind that customer support is invariably provided by multi-operator call centres.

In view of this, the invention allows the configuration information to be passed to a holding location which in this case is a user-visible Website 18. In brief, the applet 16 prompts the user 14 to upload the configuration information to the Web server 15 using IITTP, with the Web server 15 then "translating" the received configuration information to HTML. The HTML file is then uploaded, using a servlet 19, embedded within the Web server 15, to the user-visible site 18. It is again worth noting, that at this stage of the process, the telephonic connection 13 is still all that remains between the user 14 and the support agent 12: thus, at this point, the support agent 12 has no way of accessing the configuration information now provided on the user-visible Website 18. To provide the support agent 12 with access to the configuration information, the servlet generates a location identifier 20 which identifies the user-visible site 18. In its simplest form, this may constitute the URL of the site 18, with this information conveniently being displayed to the user 14 via the screen 11a of the PC 11. At this point, the user 14 may simply dictate the URL of the site to the support agent 12 over the telephone, although, as will be appreciated, the length (i.e. number of characters) and complexity of the URL may not only make this inconvenient, but may also give rise to a serious possibility of errors being made at both ends of the telephonic connection 13. The invention thus provides for automatic transmission of the location identifier to the support agent 12, by converting the identifier received from the Web server 15 into a transmission 20a which comprises a number of sounds which are representative of the location identifier. The sounds, which are chosen so as to be readily transmissible using a standard telephonic connection, may vary, in their pitch, frequency and spacing to identify the location of the site 18. Whilst, at one extreme, the sounds could be understandable by the (human) support agent 12, it is envisaged that a more effective communication could be established by encoding the sonic transmission in a form that is not understandable directly by the human support agent 12. The support agent's PC 21 is thus provided with a transducer (not shown) which is able to convert the incoming sonic code to computer-readable information which is then used, in conjunction with the PC 21's Web browser, to access the site 18. This enables the support agent 12 to sec the configuration information provided on that site. It will be appreciated that not all of the URL may need to be transmitted: the "home" page is already known to the support agent, and it may therefore suffice to transmit the latter part of the URL, to enable the connection to he made.

From the user's perspective, the support agent 12 is provided with the configuration information purely by virtue of the telephonic connection, although, in truth, the data transfer is effected using HTTP connectivity.

Whilst, in some cases, access to the "user-generated" site 18 may in itself enable the support agent 12 to diagnose and rectify a fault on the user's PC 11, it is often the case that additional information will be required by the support agent.

To this end, the servlet 19 adds to the site 18 by incorporating comparison data received from a comparison database 21. The comparison data includes information relating to current versions of hardware and software releases, for example, with this information being displayed in conjunction with, or alongside, the user-specific configuration information uploaded to the site 18. The effect of this, from the support agent's viewpoint, is that an "embellished" support-visible site 22 is generated, with the embellished site having been created dynamically by the servlet 19. The support-visible site 22 thus enables the support agent 12 to analyse the hardware/software components provided on the user's PC 11 in the light of currently available alternatives. As will be appreciated, this provides the support agent 12 with a number of "pointers" to possible remedial actions: if, for example, the user 14 is experiencing difficulties with a printer or scanner, the support visible site 22 may show to the support agent 12 that the user's printer/scanner drivers are out of date, and suggest that they be updated with contemporary (i.e. current) versions.

If, having performed a diagnosis in this way, the support agent 12 decides that a software update (or patch) is required, the support agent 12 is able to effect this, again using the servlet 19. In brief, dispatch or appropriate commands from the support agent's PC 21 to the servlet 19 causes the servlet to launch a trusted Java applet 23 from within the user-visible site, 18 (to which, at that point, the user's PC 11 is connected). The applet 23, being trusted, is allowed to operate outside the sandbox of the user's PC 11, and thus effects a connection between the user's PC 11 and a remote update database 24.

Alternatively, the servlet 19 may simply use the applet 16, which is already running in the user's browser, to effect the download. This may be preferable, as it obviates the requirement of a further "trust" request.

The connection 25 may be a Web connection - i.e. HTTP-based - or may be a dial-up database connection of generally conventional type. Once the connection 25 is established, an appropriate software update is downloaded to the PC 11 from the update database 24, and installed on the PC I 1 in generally conventional manner.

The result of this, as will be appreciated, is that the user 14 is able to obtain a comprehensive diagnosis by the support agent 12 simply by uploading diagnostic files (for example) to a mutually assessable Website, and by providing the support agent with an encoded identifier which allows the support agent 12 to access the uploaded data. From the user's perspective, the process is deceptively simple: all that the user need do is to upload the diagnostic files to a Website, and to transmit sounds generated by the PC 11 to the support agent 12 using a conventional telephonic connection 13. This can be achieved simply by placing the user's telephone handset next to the speaker/buzzer of the PC 11, as the sounds are generated within a frequency band that can readily be transmitted using conventional telephone networks. Moreover, the comparison and update steps require little or no input on the part of the user, as the support visible site 22 is generated by the servlet 19, with the servlet 19 also effecting the update process, should that be required.

To provide the user with security against unauthorised access to the user-visible site 18, it is envisaged by the applicants that access to this site may be password-protected, such that the support agent 12 is required to enter a user ID and/or password before access to the site 18 will be allowed.

Finally, it will be understood by those well versed in the art that the term "computer" is not to be interpreted too nacrowly, in that the invention could well he applied to other electronic apparatus having a computing facility. Thus, it is envisaged by the applicants that the present invention could perhaps be used to diagnose faults on a range of domestic electronic goods, such as video recorders, televisions, DVD players and game-playing consoles.

In the present specification "comprise" means "includes or consists of" and "comprising" means "including or consisting of".

## Claims

1. A method of providing remote support to a computer user (14) by providing access to configuration information, relating to the users computer (11), to a support agent (12), remote from the computer, the method comprising:
a) extracting and gathering the information from the computer (11), and being **characterized in**
b) passing the information, using a first data channel, to a remote holding location (18), which location is unknown to the support agent (12),
c) receiving, in the user's computer (11), a location identifier (20) associated with the holding location (18) and
d) transmitting the location identifier (20) from the user's computer (11) to the support agent (12), using a second, different, data channel (13), to enable the support agent (12) to access the information at said holding location through a third channel (40), allowing the support agent (12) to provide the remote support required through a support agent connection element.

2. A method according to Claim 1 wherein the holding location (18) is an Internet site visible to a user of the computer (11).

3. A method according to Claim 1 or Claim 2 wherein the location identifier (20) is transmitted to the support agent (12) in a form differing from that in which it is received by the computer (11).

4. A method according to Claim 1, Claim 2 or Claim 3 wherein the location identifier (20) received by the computer (11) is imperceptible by the user (14), or is such that it does not allow the user (14) to understand it directly.

5. A method according to any one of the preceding claims wherein the transmission is encoded, the support agent (12) performing a decoding operation in order to access the location information (20).

6. A method according to any one of the preceding claims wherein the transmission comprises a sound.

7. A method according to any one of the preceding claims wherein the transmission is such that it does not allow a human to understand the information directly from the transmission.

8. A method according to Claim 5, Claim 6 or Claim 7 wherein the decoding operation comprises a transduction step.

9. A method according to any one of Claims 2 to 8 wherein the Internet site (18) is created dynamically using the configuration information.

10. A method according to any one of the preceding claims wherein information specific to the user's computer (11) is also transmitted to the support agent (12), the computer-specific information being used by the support agent (12) to obtain comparison information for the purpose of comparing the computer's actual configuration to other, possible configurations.

11. A method according to Claim 10 wherein the computer-specific information comprises the user's computer's serial number and/or model number.

12. A method according to Claim 10 or Claim 11 wherein the comparison information is extracted from a remote database (21), the comparison information being used dynamically to create a support-visible Internet site (22), differing from the user-visible site (18).

13. A method according to Claim 12 wherein the user-visible site (18) and the support-visible site (22) are both created using a servlet resident on a mutually accessible Web server.

14. A method according to Claim 12 or Claim 13 wherein the support-visible site (22) is generated and accessed automatically upon receipt by the support agent (12) of the location identifier (20) and/or computer-specific information.

15. A method according to any one of Claims 10 to 14 wherein the location identifier (20) and computer-specific information are transmitted to the support agent (12) using a telephonic voice connection.

16. A method according to any one of Claims 2 to 15 wherein the location identifier (20) is the URL of the user-visible Internet site.

17. A method according to any one of Claims 13 to 16 wherein the configuration information comprises diagnostic results files, and wherein the Web server passes the files to the user-visible Internet site (18) as an HTML file.

18. A method according to any one of the preceding claims wherein the configuration information is obtained by a software agent (17) received from an Internet source.

19. A method according to Claim 18 wherein the software agent (17) is received using an object-oriented component such as an applet (16) or ActiveX control.

20. A method according to any one of the preceding claims wherein a connection is established with an update database (24), such that updated or replacement software components may be downloaded to the user's computer (11).

21. A method according to Claim 20 wherein the connection is established using the or an additional servlet (19).

22. An arrangement for providing remote support to a computer user (14), comprising:
a) a configuration information gathering element, operable to gather configuration information relating to the user's computer (11), and **characterized in** comprising:
b) a configuration information dispatch element, operable to dispatch the configuration information to a remote holding location (18), using a first data channel,
c) a location identifier receiving element, operable to receive a location identifier (20) which identifies the holding location (18),
d) a location identifier transmission element, operable to transmit the location identifier from the user's computer to a remote support agent (12), using a second, different, data channel and
e) a support agent connection element, operable to establish a connection to the holding location (18) through a third channel (10), whereby the support agent (12) may access the configuration information.

23. Support agent apparatus for providing remote support to a computer user (14), comprising:
a) a location identifier receiving element, operable to receive from the computer (11) using successively a first data channel, said first channel connecting said user'computer to a remote holding location and a second channel (13), said second channel connecting said user'computer to the support agent, a location identifier (20) which identifies a holding location (18) at which is held configuration information relating to the computer (11), and
b) a support agent connection element, operable to establish a connection to the holding location (18), using a third different, data channel (10), whereby the support agent (12) may access the configuration information.

24. Apparatus according to Claim 23 wherein the location identifier receiving element comprises a decoder, to decode the location identifier, which is such that it does not allow a human directly to understand the information provided thereby.

25. Client apparatus for obtaining remote support for a computer user (14), comprising:
a) a configuration information gathering element, operable to gather configuration information relating to the user's computer (11),
b) a configuration information dispatch element, operable to dispatch the configuration information to a remote holding location (18), using a first data channel,
c) a location identifier receiving element, operable to receive a location identifier (20) which identifies the holding location,
d) a location identifier transmission element, operable to transmit the location identifier from the user's computer to a remote support agent (12), using a second, different, data channel (13), whereby the support agent (12) may access the configuration information through a third, different, data channel (10) to provide remote support to the user (14).

## Patentansprüche

1. Ein Verfahren zum Bereitstellen einer Fernunterstützung für einen Computerbenutzer (14) durch ein Bereitstellen eines Zugriffs auf Konfigurationsinformationen, die sich auf den Computer (11) des Benutzers beziehen, für einen Unterstützungsagenten (12), der entfernt von dem Computer ist, wobei das Verfahren folgende Schritte aufweist:
a) Extrahieren und Sammeln der Informationen von dem Computer (11) und **gekennzeichnet durch**:
b) Weiterleiten der Informationen unter Verwendung eines ersten Datenkanals an einen entfernten Halteort (18), wobei dieser Ort dem Unterstützungsagenten (12) unbekannt ist,
c) Empfangen eines Ortsidentifizierers (20), der dem Halteort (18) zugeordnet ist, in dem Computer (11) des Benutzers, und
d) Übertragen des Ortsidentifizierers (20) von dem Computer (11) des Benutzers an den Unterstützungsagenten (12) unter Verwendung eines zweiten unterschiedlichen Datenkanals (13), um dem Unterstützungsagenten (12) Zugriff auf die Informationen an dem Halteort **durch** einen dritten Kanal (10) zu ermöglichen, was es dem Unterstützungsagenten (12) erlaubt, eine erforderliche Fernunterstützung **durch** ein Unterstützungsagent-Verbindungselement bereitzustellen.

2. Ein Verfahren gemäß Anspruch 1, bei dem der Halteort (18) ein Internet-Ort ist, der für einen Benutzer des Computers (11) sichtbar ist.

3. Ein Verfahren gemäß Anspruch 1 oder Anspruch 2, bei dem der Ortsidentifizierer (20) in einer Form an den Unterstützungsagenten (12) übertragen wird, die sich von derjenigen unterscheidet, in der derselbe durch den Computer (11) empfangen wird.

4. Ein Verfahren gemäß Anspruch 1, Anspruch 2 oder Anspruch 3, bei dem der Ortsidentifizierer (20), der durch den Computer (11) empfangen wird, durch den Benutzer (14) nicht wahrnehmbar ist oder derart ist, dass derselbe es dem Benutzer (14) nicht erlaubt, diesen direkt zu verstehen.

5. Ein Verfahren gemäß einem der vorhergehenden Ansprüche, bei dem die Übertragung codiert ist, wobei der Unterstützungsagent (12) eine Decodierungsoperation durchführt, um auf die Ortsinformationen (20) zuzugreifen.

6. Ein Verfahren gemäß einem der vorhergehenden Ansprüche, bei dem die Übertragung einen Ton aufweist.

7. Ein Verfahren gemäß einem der vorhergehenden Ansprüche, bei dem die Übertragung derart ist, dass diese es einem Menschen nicht erlaubt, die Informationen direkt von der Übertragung zu verstehen.

8. Ein Verfahren gemäß Anspruch 5, Anspruch 6 oder Anspruch 7, bei dem die Decodierungsoperation einen Wandlungsschritt aufweist.

9. Ein Verfahren gemäß einem der Ansprüche 2 bis 8, bei dem der Internet-Ort (18) dynamisch unter Verwendung der Konfigurationsinformationen erzeugt wird.

10. Ein Verfahren gemäß einem der vorhergehenden Ansprüche, bei dem Informationen, die spezifisch für den Computer (11) des Benutzers sind, ebenso an den Unterstützungsagenten (12) übertragen werden, wobei die computerspezifischen Informationen durch den Unterstützungsagenten (12) verwendet werden, um Vergleichsinformationen für den Zweck eines Vergleichens der tatsächlichen Konfiguration des Computers mit anderen möglichen Konfigurationen zu erhalten.

11. Ein Verfahren gemäß Anspruch 10, bei dem die computerspezifischen Informationen die Seriennummer und/oder Modellnummer des Computers des Benutzers aufweisen.

12. Ein Verfahren gemäß Anspruch 10 oder Anspruch 11, bei dem die Vergleichsinformationen aus einer entfernten Datenbank (21) extrahiert werden, wobei die Vergleichsinformationen dynamisch verwendet werden, um einen für die Unterstützung sichtbaren Internet-Ort (22) zu erzeugen, der sich von dem für den Benutzer sichtbaren Ort (18) unterscheidet.

13. Ein Verfahren gemäß Anspruch 12, bei dem der für den Benutzer sichtbare Ort (18) und der für die Unterstützung sichtbare Ort (22) beide unter Verwendung eines Servlets erzeugt werden, das sich auf einem gegenseitig zugänglichen Web-Server befindet.

14. Ein Verfahren gemäß Anspruch 12 oder Anspruch 13, bei dem der für die Unterstützung sichtbare Ort (22) automatisch auf einen Empfang des Ortsidentifizierers (20) und/oder computerspezifischer Informationen durch den Unterstützungsagenten (12) hin erzeugt und so auf diesen zugegriffen wird.

15. Ein Verfahren gemäß einem der Ansprüche 10 bis 14, bei dem der Ortsidentifizierer (20) und computerspezifische Informationen unter Verwendung einer Telefonsprachverbindung an den Unterstützungsagenten (12) übertragen werden.

16. Ein Verfahren gemäß einem der Ansprüche 2 bis 15, bei dem der Ortsidentifizierer (20) der URL des für den Benutzer sichtbaren Internet-Orts ist.

17. Ein Verfahren gemäß einem der Ansprüche 13 bis 16, bei dem die Konfigurationsinformationen Diagnoseergebnisdateien aufweisen, und bei dem der Web-Server die Dateien als eine HTML-Datei an den für den Benutzer sichtbaren Internet-Ort (18) weiterleitet.

18. Ein Verfahren gemäß einem der vorhergehenden Ansprüche, bei dem die Konfigurationsinformationen durch einen Softwareagenten (17), der von einer Internet-Quelle empfangen wird, erhalten werden.

19. Ein Verfahren gemäß Anspruch 18, bei dem der Softwareagent (17) unter Verwendung einer objektorientierten Komponente, wie z. B. eines Applets (16) oder einer ActiveX-Steuerung, empfangen wird.

20. Ein Verfahren gemäß einem der vorhergehenden Ansprüche, bei dem eine Verbindung mit einer Aktualisierungsdatenbank (24) derart eingerichtet wird, dass aktualisierte oder Ersatzsoftwarekomponenten an den Computer (11) des Benutzers heruntergeladen werden könnten.

21. Ein Verfahren gemäß Anspruch 20, bei dem die Verbindung unter Verwendung des oder eines zusätzlichen Servlets (19) eingerichtet wird.

22. Eine Anordnung zum Bereitstellen einer Fernunterstützung für einen Computerbenutzer (14), mit folgenden Merkmalen:
a) einem Konfigurationsinformationssammelelement, das wirksam ist, um Konfigurationsinformationen bezüglich des Computers (11) des Benutzers zu sammeln, und **dadurch gekennzeichnet, dass** sie folgende Merkmale aufweist:
b) ein Konfigurationsinformationsversandelement, das wirksam ist, um die Konfigurationsinformationen unter Verwendung eines ersten Datenkanals an einen entfernten Halteort (18) zu versenden,
c) ein Ortsidentifiziererempfangselement, das wirksam ist, um einen Ortsidentifizierer (20) zu empfangen, der den Halteort (18) identifiziert,
d) ein Ortsidentifiziererübertragungselement, das wirksam ist, um den Ortsidentifizierer von dem Computer des Benutzers unter Verwendung eines zweiten unterschiedlichen Datenkanals an einen entfernten Unterstützungsagenten (12) zu übertragen, und
e) ein Unterstittzungsagent-Verbindungselement, das wirksam ist, um eine Verbindung zu dem Halteort (18) durch einen dritten Kanal (10) einzurichten, wodurch der Unterstützungsagent (12) auf die Konfigurationsinformationen zugreifen könnte.

23. Unterstützungsagentvorrichtung zum Bereitstellen einer Fernunterstützung für einen Computerbenutzer (14), mit folgenden Merkmalen:
a) einem Ortsidentifiziererempfangselement, das wirksam ist, um von dem Computer (11) unter Verwendung von aufeinanderfolgend einem ersten Datenkanal, wobei der erste Kanal den Computer des Benutzers mit einem entfernten Halteort verbindet, und einem zweiten Kanal (13), wobei der zweite Kanal den Computer des Benutzers mit dem Unterstützungsagenten verbindet, einen Ortsidentifizierer (20) zu empfangen, der einen Halteort (18) identifiziert, an dem Konfigurationsinformationen bezüglich des Computers (11) gehalten werden, und
b) einem Unterstützungsagent-Verbindungselement, das wirksam ist, um eine Verbindung zu dem Halteelement (18) unter Verwendung eines dritten unterschiedlichen Datenkanals (10) einzurichten, wodurch der Unterstützungsagent (12) auf die Konfigurationsinformationen zugreifen könnte.

24. Vorrichtung gemäß Anspruch 23, bei der das Ortsidentifiziererempfangselement einen Decodierer aufweist, um den Ortsidentifizierer zu decodieren, der derart ist, dass er es einem Menschen nicht direkt erlaubt, die durch denselben bereitgestellten Informationen zu verstehen.

25. Klientenvorrichtung zum Erhalten einer Fernunterstützung für einen Computerbenutzer (14), mit folgenden Merkmalen:
a) einem Konfigurationsinformationssammelelement, das wirksam ist, um Konfigurationsinformationen bezüglich des Computers (11) des Benutzers zu sammeln,
b) einem Konfigurationsinformationsversandelement, das wirksam ist, um die Konfigurationsinformationen unter Verwendung eines ersten Datenkanals an einen entfernten Halteort (18) zu versenden,
c) einem Ortsidentifiziererempfangselement, das wirksam ist, um einen Ortsidentifizierer (20) zu empfangen, der den Halteort identifiziert,
d) einem Ortsidentifiziererübertragungselement, das wirksam ist, um den Ortsidentifizierer von dem Computer des Benutzers unter Verwendung eines zweiten unterschiedlichen Datenkanals (13) an einen entfernten Unterstützungsagenten (12) zu übertragen, wodurch der Unterstützungsagent (12) auf die Konfigurationsinformationen durch einen dritten unterschiedlichen Datenkanal (10) zugreifen könnte, um eine Fernunterstützung für den Benutzer (14) bereitzustellen.

## Revendications

1. Procédé pour porter assistance à l'utilisateur d'un ordinateur (14) en donnant accès à des informations de configuration, concernant l'ordinateur de l'utilisateur (11) à un agent d'assistance (12) distant de l'ordinateur, le procédé comprenant :
a) l'extraction et la collecte des informations de l'ordinateur (11), et étant **caractérisé par** :
b) la transmission des informations, en utilisant un premier canal de données, à un emplacement de conservation distant (18), emplacement qui est inconnu de l'agent d'assistance (12),
c) la réception, dans l'ordinateur de l'utilisateur (11), d'un identifiant d'emplacement (20) associé à l'emplacement de conservation (18) et
d) la transmission de l'identifiant d'emplacement (20) depuis l'ordinateur de l'utilisateur (11) vers l'agent d'assistance (12), en utilisant un deuxième canal de données différent (13), pour permettre à l'agent d'assistance (12) d'accéder aux informations audit emplacement de conservation par l'intermédiaire d'un troisième canal (10), permettant à l'agent d'assistance (12) de fournir l'assistance requise par l'intermédiaire d'un élément de connexion d'agent d'assistance.

2. Procédé selon la revendication 1, dans lequel l'emplacement de conservation (18) est un site Internet visible par un utilisateur de l'ordinateur (11).

3. Procédé selon la revendication 1 ou la revendication 2, dans lequel l'identifiant d'emplacement (20) est transmis à l'agent d'assistance (12) sous une forme différente de celle sous laquelle il est reçu par l'ordinateur (11).

4. Procédé selon la revendication 1, la revendication 2 ou la revendication 3, dans lequel l'identifiant d'emplacement (20) reçu par l'ordinateur (11) est imperceptible à l'utilisateur (14) ou il est tel qu'il ne permet pas à l'utilisateur (14) de le comprendre directement.

5. Procédé selon l'une quelconque des revendications précédentes, dans lequel la transmission est codée, l'agent d'assistance (12) effectuant une opération de décodage pour accéder aux informations d'emplacement (20).

6. Procédé selon l'une quelconque des revendications précédentes, dans lequel la transmission comprend un son.

7. Procédé selon l'une quelconque des revendications précédentes, dans lequel la transmission est telle qu'elle ne permet pas à un être humain de comprendre directement les informations de la transmission.

8. Procédé selon la revendication 5, la revendication 6 ou la revendication 7, dans lequel l'opération de décodage comprend une étape de transduction.

9. Procédé selon l'une quelconque des revendications 2 à 8, dans lequel le site Internet (18) est créé de façon dynamique en utilisant les informations de configuration.

10. Procédé selon l'une quelconque des revendications précédentes, dans lequel des informations spécifiques à l'ordinateur de l'utilisateur (11) sont également transmises à l'agent d'assistance (12), les informations spécifiques à l'ordinateur étant utilisées par l'agent d'assistance (12) pour obtenir des informations de comparaison dans le but de comparer la configuration réelle de l'ordinateur à d'autres configurations possibles.

11. Procédé selon la revendication 10, dans lequel les informations spécifiques à l'ordinateur comprennent le numéro de série de l'ordinateur de l'utilisateur et/ou le numéro de modèle.

12. Procédé selon la revendication 10 ou la revendication 11, dans lequel les informations de comparaison sont extraites d'une base de données distante (21), les informations de comparaison étant utilisées de façon dynamique pour créer un site Internet visible par l'agent d'assistance (22), différent du site visible par l'utilisateur (18).

13. Procédé selon la revendication 12, dans lequel le site visible par l'utilisateur (18) et le site visible par l'agent d'assistance (22) sont tous deux créés en utilisant un servlet résident sur un serveur Web à accès mutuel.

14. Procédé selon la revendication 12 ou la revendication 13, dans lequel le site visible par l'agent d'assistance est produit et on y accède automatiquement lors de la réception par l'agent d'assistance (12) de l'identifiant d'emplacement (20) et/ou des informations spécifiques à l'ordinateur.

15. Procédé selon l'une quelconque des revendications 10 à 14, dans lequel l'identifiant d'emplacement (20) et les informations spécifiques à l'ordinateur sont transmis à l'agent d'assistance (12) en utilisant une connexion téléphonique vocale.

16. Procédé selon l'une quelconque des revendications 2 à 15, dans lequel l'identifiant d'emplacement (20) est l'URL du site Internet visible par l'utilisateur.

17. Procédé selon l'une quelconque des revendications 13 à 16, dans lequel les informations de configuration comprennent des fichiers de résultats de diagnostic et dans lequel le serveur Web transmet les fichiers au site Internet visible par l'utilisateur (18) sous la forme d'un fichier HTML.

18. Procédé selon l'une quelconque des revendications précédentes, dans lequel les informations de configuration sont obtenues par un agent logiciel (17) reçu depuis une source Internet.

19. Procédé selon la revendication 18, dans lequel l'agent logiciel (17) est reçu en utilisant un composant orienté objet tel qu'un applet (16) ou un contrôle ActiveX.

20. Procédé selon l'une quelconque des revendications précédentes, dans lequel une connexion est établie avec une base de données de mises à jour (24), de telle sorte que des composants logiciels mis à jour ou de remplacement puissent être téléchargés vers l'ordinateur de l'utilisateur (11).

21. Procédé selon la revendication 20, dans lequel la connexion est établie en utilisant le ou un servlet supplémentaire (19).

22. Agencement pour porter assistance à l'utilisateur d'un ordinateur (14) comprenant :
a) un élément de collecte d'informations de configuration, pouvant être actionné pour recueillir des informations de configuration concernant l'ordinateur de l'utilisateur (11), et **caractérisé en ce qu'**il comprend :
b) un élément d'envoi d'informations de configuration, pouvant être actionné pour envoyer les informations de configuration à un emplacement de conservation distant (18), en utilisant un premier canal de données,
c) un élément récepteur d'identifiant d'emplacement, pouvant être actionné pour recevoir un identifiant d'emplacement (20) qui identifie l'emplacement de conservation (18),
d) un élément de transmission d'identifiant d'emplacement, pouvant être actionné pour transmettre l'identifiant d'emplacement depuis l'ordinateur de l'utilisateur vers un agent d'assistance distant (12), en utilisant un deuxième canal de données différent (13) et
e) un élément de connexion d'agent d'assistance, pouvant être actionné pour établir une connexion vers l'emplacement de conservation (18) par l'intermédiaire d'un troisième canal (10), de façon que l'agent d'assistance (12) puisse accéder aux informations de configuration.

23. Dispositif d'agent d'assistance pour porter assistance à l'utilisateur d'un ordinateur (14) comprenant :
a) un élément récepteur d'identifiant d'emplacement, pouvant être actionné pour recevoir depuis l'ordinateur (11), en utilisant successivement un premier canal de données, ledit premier canal connectant ledit ordinateur de l'utilisateur à un emplacement de conservation distant et un deuxième canal de données (13), ledit deuxième canal connectant ledit ordinateur de l'utilisateur à l'agent d'assistance, un identifiant d'emplacement (20) qui identifie un emplacement de conservation (18) dans lequel sont conservées des informations de configuration concernant l'ordinateur (11), et
b) un élément de connexion d'agent d'assistance, pouvant être actionné pour établir une connexion vers l'emplacement de conservation (18), en utilisant un troisième canal de données différent (10), de façon que l'agent d'assistance (12) puisse accéder aux informations de configuration.

24. Dispositif selon la revendication 23, dans lequel l'élément de réception d'identifiant d'emplacement comprend un décodeur, pour décoder l'identifiant d'emplacement, qui est tel qu'il ne permet pas directement à un être humain de comprendre les informations fournies par celui-ci.

25. Dispositif client pour obtenir une assistance pour l'utilisateur d'un ordinateur (14) comprenant :
a) un élément de collecte d'informations de configuration, pouvant être actionné pour recueillir des informations de configuration concernant l'ordinateur de l'utilisateur (11),
b) un élément d'envoi d'informations de configuration, pouvant être actionné pour envoyer les informations de configuration à un emplacement de conservation distant (18), en utilisant un premier canal de données,
c) un élément récepteur d'identifiant d'emplacement, pouvant être actionné pour recevoir un identifiant d'emplacement (20) qui identifie l'emplacement de conservation,
d) un élément de transmission d'identifiant d'emplacement, pouvant être actionné pour transmettre l'identifiant d'emplacement depuis l'ordinateur de l'utilisateur vers un agent d'assistance distant (12), en utilisant un deuxième canal de données différent (13), de façon que l'agent d'assistance (12) puisse accéder aux informations de configuration par l'intermédiaire d'un troisième canal de données différent (10) pour porter assistance à l'utilisateur (14).
